Europäisches Patentamt

European Patent Office

Office européen des brevets

(19)

(11) Numéro de publication: **0 388 268**
**A1**

## (12) DEMANDE DE BREVET EUROPEEN

(21) Numéro de dépôt: 90400643.4

(22) Date de dépôt: **12.03.90**

(51) Int. Cl.5: **F16L 37/00, F28F 9/02**

(30) Priorité: **15.03.89 FR 8903380**

(43) Date de publication de la demande:
**19.09.90 Bulletin 90/38**

(84) Etats contractants désignés:
**BE DE ES GB IT LU NL SE**

(71) Demandeur: **HUTCHINSON S.A. une Société Anonyme dotée d'un Conseil de Surveillance et d'un Directoire**
**2, rue Balzac**
**F-75008 Paris(FR)**

(72) Inventeur: **Briet, Gilles**
**Le Petit Vallot, Neuvy Grandchamp**
**F-71130 Gueugnon(FR)**

(74) Mandataire: **Orès, Bernard et al**
**Cabinet ORES 6, Avenue de Messine**
**F-75008 Paris(FR)**

(54) **Dispositif de raccord rapide à plusieurs voies, notamment pour la réalisation de circuits de refroidissement de moteurs d' automobiles.**

(57) Raccord rapide pour relier simultanément au moins deux tubulures ou durites à la boîte à eau d'un radiateur ou aux organes d'entrée et de sortie du fluide de refroidissement d'un moteur de véhicule automobile.

Il comporte un embout mâle (10) de forme conjuguée d'une cheminée de la boîte à eau, n conduits rigides, (3, 4,..) dont les débouchés ($O_1$, $O_2$,..) dans ledit embout sont de forme et de position conjuguées des orifices de débouché de voies correspondantes ($V_1$ ...$V_3$) dans la cheminée (6) de la boîte à eau ou desdits organes pour former n circuits de fluide ; et des joints ($j_3$, $j_2$) assurant l'étanchéité des différents circuits de fluide entre eux, l'étanchéité des circuits vis-à-vis de l'extérieur étant assurée par un joint unique ($j_1$) quel que soit le nombre n de circuits.

Application : Industrie automobile.

FIG.3

EP 0 388 268 A1

## DISPOSITIF DE RACCORD RAPIDE A PLUSIEURS VOIES, NOTAMMENT POUR LA REALISATION DE CIRCUITS DE REFROIDISSEMENT DE MOTEURS D'AUTOMOBILES

L'invention concerne les circuits de circulation de fluide, notamment les circuits de refroidissement et/ou de chauffage utilisés sur les véhicules automobiles.

Elle vise, en particulier, un dispositif de raccord rapide à plusieurs voies, notamment pour la réalisation de circuits de refroidissement de moteurs d'automobiles, c'est-à-dire un circuit comportant essentiellement un radiateur dans lequel est refroidi un liquide mis en circulation autour des cylindres du moteur, et un bocal de dégazage servant aussi de vase d'expansion, mis ou non à l'air libre suivant le type de réalisation. A un tel circuit peuvent en outre être associés un radiateur auxiliaire assurant le réchauffage éventuel de l'air de climatisation de l'habitacle du véhicule, avec une vanne thermostatique et/ou un thermostat inséré dans le circuit de liquide entre le moteur et le radiateur principal pour accélérer la mise en température du moteur.

Les divers éléments du circuit sont généralement raccordés les uns aux autres par des tubulures, comme des durites, fixées sur leurs embouts respectifs à l'aide de colliers dont la mise en place est manuelle, et par conséquent relativement longue, alors que la tendance générale dans l'industrie automobile est de réduire le plus possible les coûts de main d'oeuvre et, à cet effet, de généraliser autant que faire se peut l'utilisation de robots commandés ou autonomes.

Afin de diminuer le nombre de raccords et la longueur de ceux-ci, les constructeurs d'automobiles et les équipementiers ont conçu des carters de moteurs dont les orifices d'entrée et de sortie du fluide de refroidissement sont l'un près de l'autre ou les uns près des autres en cas de circuit plus complexe, ainsi que des radiateurs dont les orifices d'entrée et de sortie, et éventuellement de raccordement au bocal de dégazage, sont également regroupés de manière à être situés à proximité les uns des autres et orientés de manière à ce que leurs axes soient parallèles. On a proposé, notamment, un radiateur dont les extrémités "froide" et "chaude" du circuit de fluide de refroidissement débouchent dans une boîte à eau commune, munie d'une cloison de séparation et solidaire par construction de deux embouts rigides d'axes parallèles, voisins, dont les extrémités libres sont solidaires d'une bride commune surmoulée sur une partie de leur surface. Ce radiateur est raccordé au moteur par des durites réunies par une bride et si le montage est plus simple que celui réalisé à l'aide de colliers, il nécessite cependant la pose d'un joint d'étanchéité entre deux brides et la mise en place de boulons et d'écrous ; le serrage de ces derniers peut provoquer des fuites en cas de position défectueuse du joint et nécessite encore une intervention manuelle difficilement robotisable.

On a également proposé dans FR-A-2 596 134 un dispositif de raccord rapide, notamment pour le raccordement d'une boîte à eau d'échangeur de chaleur de véhicule automobile, comportant deux éléments dont le premier constitue une cheminée cylindrique à deux voies, tandis que le second, -qui est un embout femelle de forme conjuguée de celle de la cheminée-, est destiné à être relié par des tuyaux flexibles à un circuit de liquide de refroidissement d'un moteur à combustion interne de véhicule automobile. Le joint d'un dispositif selon ce document antérieur n'est pas capable d'assurer, à lui seul, l'étanchéité vis-à-vis de l'extérieur d'un raccordement à plus de deux tubulures.

Le problème se pose donc de fournir un système de raccord rapide entre les éléments constitutifs du circuit, qui ne présente pas les inconvénients des systèmes connus et qui, en outre, soit propre à être mis en place sur une chaîne de fabrication à l'aide d'un ou de robot(s) de montage.

Un raccord rapide suivant l'invention, pour relier simultanément au moins deux tubulures comme des durites à la boîte à eau d'un radiateur ou aux organes d'entrée et de sortie du fluide de refroidissement d'un moteur de véhicule automobile, ladite boîte à eau ou lesdits organes comportant une cheminée de forme générale cylindrique et $n$ voies ($n$ étant un entier au moins égal à deux) qui débouchent dans ladite cheminée, ledit raccord comportant $n$ conduits rigides dont les débouchés dans ledit embout sont de forme et de position conjuguées des orifices de débouché desdites voies correspondantes dans la cheminée de la boîte à eau ou desdits organes pour former $n$ circuits de fluide, ainsi que des joints assurant l'étanchéité des différents circuits de fluide entre eux, est caractérisé en ce qu'il comporte :
• un embout mâle de forme conjuguée de ladite cheminée; et en ce que
• l'étanchéité des circuits vis-à-vis de l'extérieur est assurée par un unique joint supplémentaire quel que soit le nombre $n$ de circuits.

Selon une autre caractéristique de l'invention, les conduits rigides comportent chacun au moins une partie cylindrique, d'axes respectifs parallèles à l'axe de l'embout, le raccord comprenant en outre :
• des manchons en nombre au plus égal à $n$ propres à solidariser une des extrémités de chacune desdites tubulures ou durites respectivement sur les extrémités cylindriques libres desdits conduits ; et
- des moyens de serrage et de verrouillage par encliquetage dudit embout sur la cheminée de ladite boîte à eau ou desdits organes d'entrée et de sortie du fluide de refroidissement.

Un raccord selon l'invention dans lequel un seul joint assure l'étanchéité vis-à-vis de l'extérieur permet d'obtenir une réduction considérable du risque de fuite sur un circuit qu'il équipe, ce risque étant, comme en soi connu, fonction du facteur puissance du nombre de points de raccordement.

Suivant une autre caractéristique de l'invention, les moyens de serrage et de verrouillage sont avantageusement constitués par au moins deux clips coopérant avec des becs diamétralement opposés ménagés sur la surface externe de ladite cheminée de la boîte à eau ou desdits organes d'entrée et de sortie du fluide de refroidissement du moteur.

Dans une forme de réalisation, la surface externe de ladite cheminée de boîte à eau ou desdits organes présente en outre deux trous borgnes diamétralement opposés et le raccord rapide comporte alors deux doigts diamétralement opposés formant des moyens d'alignement rapide de ladite cheminée et de l'embout.

Dans une réalisation destinée au raccordement de deux durites seulement, ledit embout comporte deux parties cylindriques de diamètres externes différents, l'un des conduits rigides dudit raccord débouchant dans la partie cylindrique de plus petit diamètre, en traversant celle de plus grand diamètre tandis que l'autre conduit rigide débouche dans la partie cylindrique de plus grand diamètre.

Dans une réalisation destinée à la liaison de trois durites entre le moteur, le radiateur et un bocal de dégazage d'un circuit de refroidissement de moteur d'automobile, l'embout comporte deux parties cylindriques de diamètres externes différents, deux chambres concentriques, l'une intérieure et l'autre périphérique, ménagées dans la partie de plus petit diamètre, un des conduits destiné à être raccordé à une durite du radiateur débouchant dans la partie de plus grand diamètre extérieur, l'autre conduit destiné à être raccordé à l'autre durite du radiateur débouchant dans la chambre intérieure de la partie de plus petit diamètre extérieur, en traversant la partie de plus grand diamètre, tandis que le conduit destiné à être raccordé au bocal de dégazage débouche dans la chambre périphérique.

Suivant encore une autre caractéristique de l'invention, les conduits qui débouchent dans la chambre intérieure de la seconde partie ont une paroi commune.

L'invention a également pour objet un dispositif permettant d'établir un circuit de circulation de fluide de refroidissement entre le moteur d'un véhicule automobile, la boîte à eau du radiateur du véhicule et, le cas échéant, un radiateur auxiliaire, caractérisé en ce qu'il comporte au moins deux raccords rapides tels que définis ci-dessus, les durites destinées à la circulation dudit fluide ayant leurs extrémités fixées sur les conduits respectifs d'un et de l'autre embouts par des manchons surmoulés sur ceux-ci.

Les embouts et conduits sont avantageusement en matière plastique dure, supportant sans ramollissement des températures de l'ordre de 100°C et sont de préférence moulés d'une pièce.

D'autres caractéristiques et avantages de l'invention apparaîtront de la description qui suit, faite à titre d'exemple et en référence au dessin annexé dans lequel :

- la figure 1 est une vue d'ensemble schématique d'un circuit de refroidissement de moteur d'automobile comportant des dispositifs de raccordement suivant l'invention ;
- la figure 2 est une vue en bout d'un raccord rapide suivant l'invention et d'une partie de la boîte à eau du moteur sur lequel il est monté ;
- les figures 3, 4 et 5 sont des vues en coupe suivant les lignes III-III ; IV-IV ; et V-V de la figure 2 ;
- la figure 6 est une vue en coupe selon la ligne VI-VI de la figure 3 ;
- la figure 7 est une vue en plan du raccord rapide de la figure 2, seul ;
- la figure 8 est une vue en plan d'un raccord rapide suivant l'invention ;
- la figure 9 est une vue en coupe selon la ligne IX-IX de la figure 11 ; et
- les figures 10 et 11 sont des vues en bout, par la droite et par la gauche, respectivement, du dispositif de la figure 8.

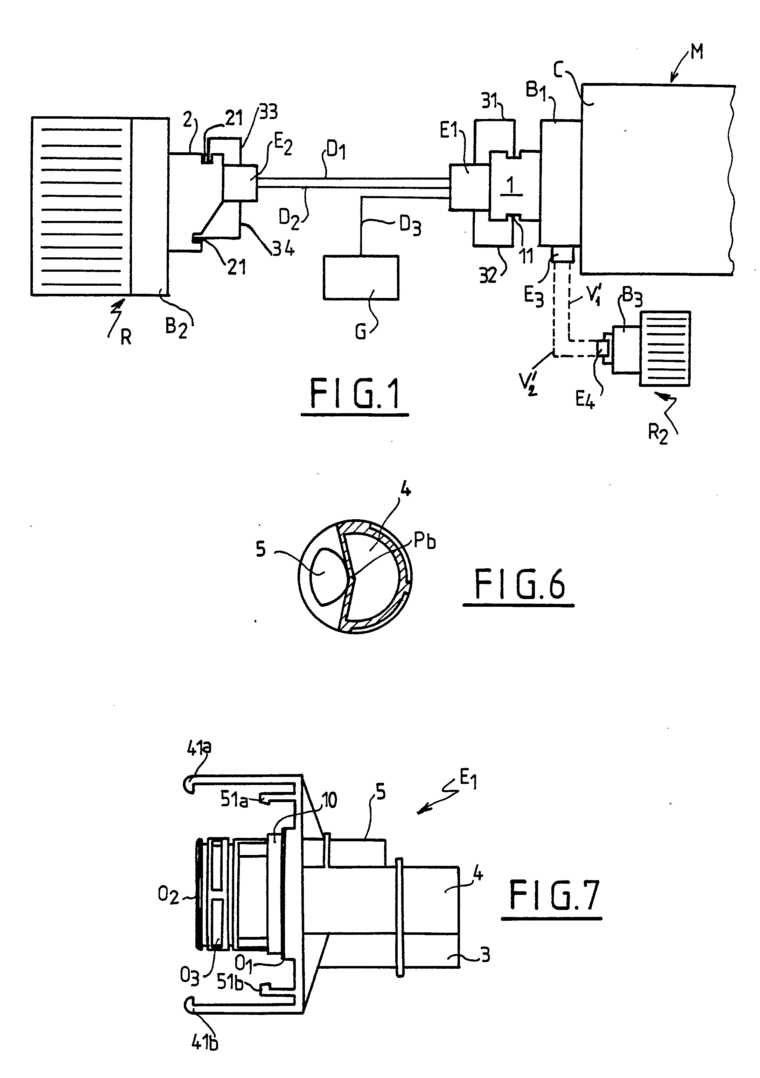

On se réfère d'abord à la figure 1 qui illustre un dispositif suivant l'invention de raccord rapide des éléments d'un circuit de liquide de refroidissement d'un moteur d'automobile.

Sur cette figure, le carter C du moteur M est muni d'une boîte à eau $B_1$ comportant un embout de raccordement 1 présentant, sur sa surface extérieure, des encoches ou dépressions 11 et la boîte à eau $B_2$ du radiateur principal R comporte un embout de raccordement 2 muni sur sa surface extérieure, d'encoches ou dépressions 21. Entre le moteur M, le radiateur principal R et le bocal de dégazage G sont disposées deux durites principales $D_1$, $D_2$ et une durite secondaire $D_3$ de plus petit diamètre que les précédentes et qui est établie entre le moteur M et le bocal de dégazage G. Pour relier les extrémités des durites $D_1$, $D_2$ et $D_3$ au moteur M, l'invention fait application d'un premier raccord rapide multivoies $E_1$, tandis que pour relier les durites $D_1$, $D_2$ au radiateur principal R, l'invention fait application d'un second raccord rapide multivoies $E_2$, les surfaces extérieures des deux raccords étant munies de clips 31, 32 et 33, 34 qui s'engagent élastiquement dans les dépressions 11 et 21 respectivement. Le raccord $E_1$ est un raccord à trois voies pour le montage des durites $D_1$, $D_2$ et $D_3$, cette dernière étant reliée au bocal de dégazage G par un collier ou par un moyen analogue. De façon similaire à ce qui vient d'être décrit, la boîte à eau $B_3$ d'un radiateur de chauffage $R_2$ est reliée à la boîte à eau $B_1$ du moteur M par deux raccords rapides $E_3$, $E_4$ à deux voies seulement.

Ces dispositifs permettent de relier le radiateur R au moteur simplement et rapidement en alignant l'axe du raccord $E_1$ avec celui de l'embout 1 de la boîte à eau $B_1$ et en verrouillant par encliquetage les clips 31 dans les dépressions 11 d'une part et, d'autre part, en alignant similairement l'axe du raccord $E_2$ avec celui de l'embout 2 de la boîte à eau $B_2$ du radiateur R et en verrouillant les clips 33 et 34 dans les dépressions 21. La liaison du radiateur R au moteur est ainsi réalisée par simple alignement de deux axes et mise en prise de deux clips au lieu du montage de quatre colliers comme requis dans les assemblages connus.

Il va de soi que la disposition décrite ci-dessus du moteur, boîte à eau, radiateur et dispositif de raccord n'est nullement limitative de l'invention, étant donné que celle-ci trouve également application dans des réalisations à raccord rapide à trois voies sur le radiateur, ou des réalisations à raccord rapide à deux voies sur chacun des éléments constitutifs du circuit, ou d'autres réalisations encore.

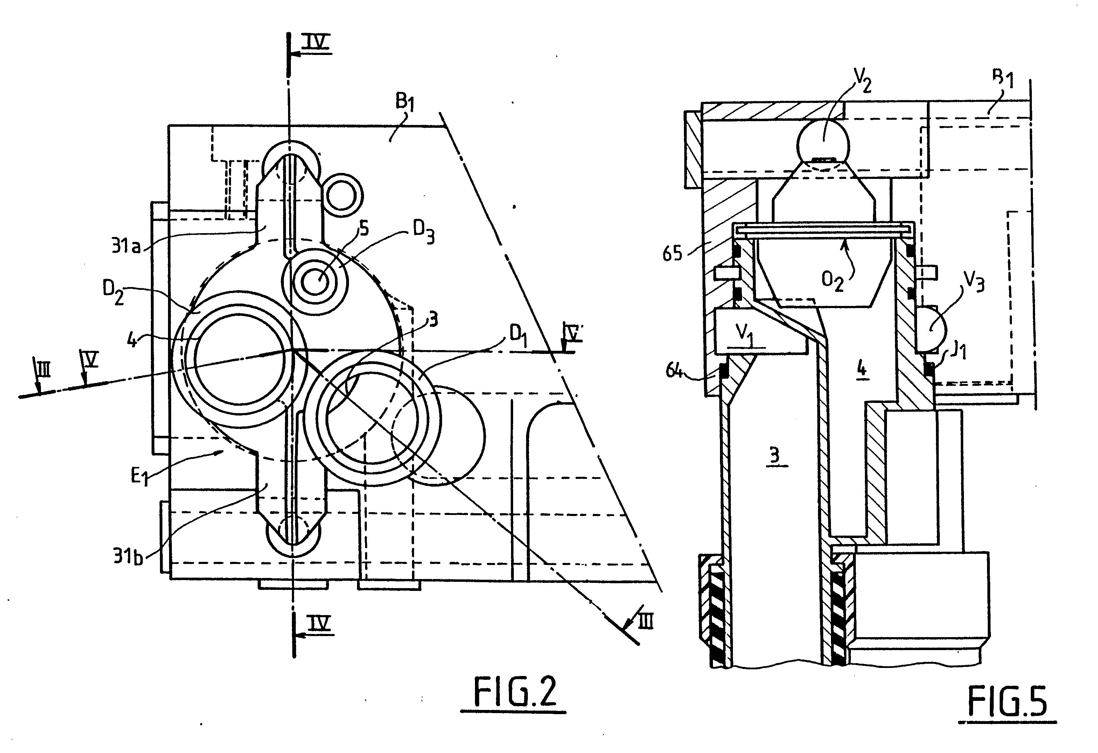

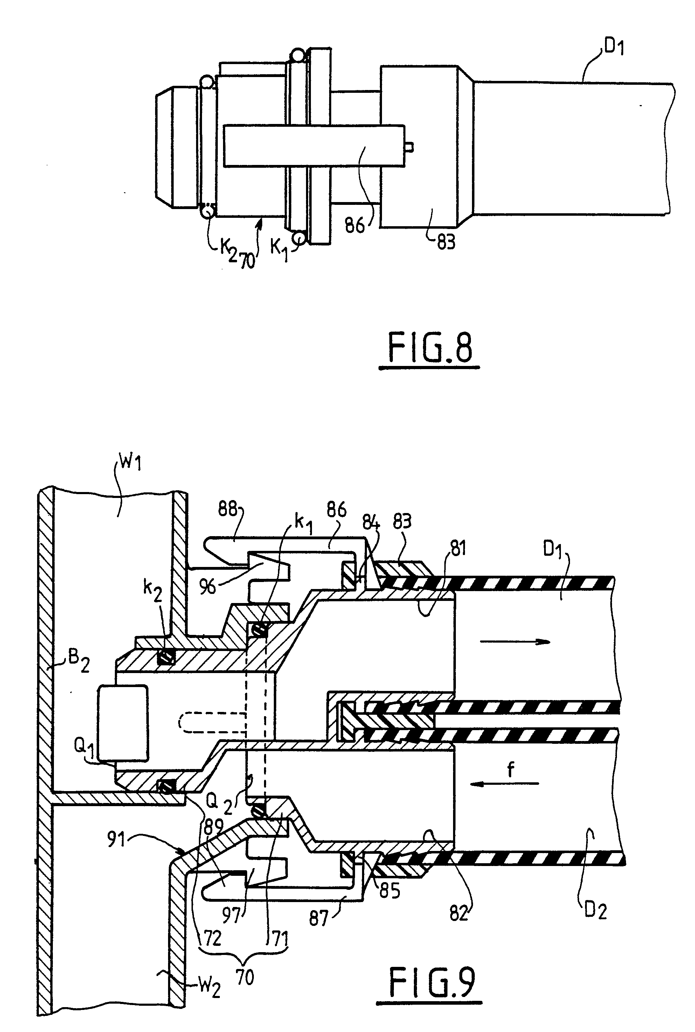

On se réfère maintenant aux figures 2 à 7 qui montrent avec plus de détail, respectivement en vue extérieure (figures 2 et 7) et en vues en coupes, le raccord rapide $E_1$ suivant l'invention. Celui-ci présente trois conduits d'axes parallèles) 3, 4, 5, qui débouchent dans un embout mâle, 10, les conduits et l'embout formant une pièce unique avantageusement réalisée par moulage d'une matière plastique choisie de manière à supporter les températures du fluide du circuit de refroidissement, d'une part, et, d'autre part, les conditions régnant sous le capot-moteur d'une automobile. Les durites $D_1$, $D_2$, $D_3$ sont montées sur les extrémités à section droite circulaire 3a, 4a, et 5a respectivement, des conduits opposés à l'embout 10 par des surmoulages en matière plastique, 23, 24 et 25. Les conduits 3 et 4 d'une part, 4 et 5 d'autre part, ont des parois communes Pa, Pb respectivement, sur une partie de leur longueur opposée à leurs extrémités raccordées aux durites et, alors que le conduit 4 comporte en outre une partie plus large au voisinage de l'embout, les conduits 3 et 5 ont des sections évolutives, figure 6, de sorte que les extrémités libres des trois conduits sont séparées pour permettre le montage des durites.

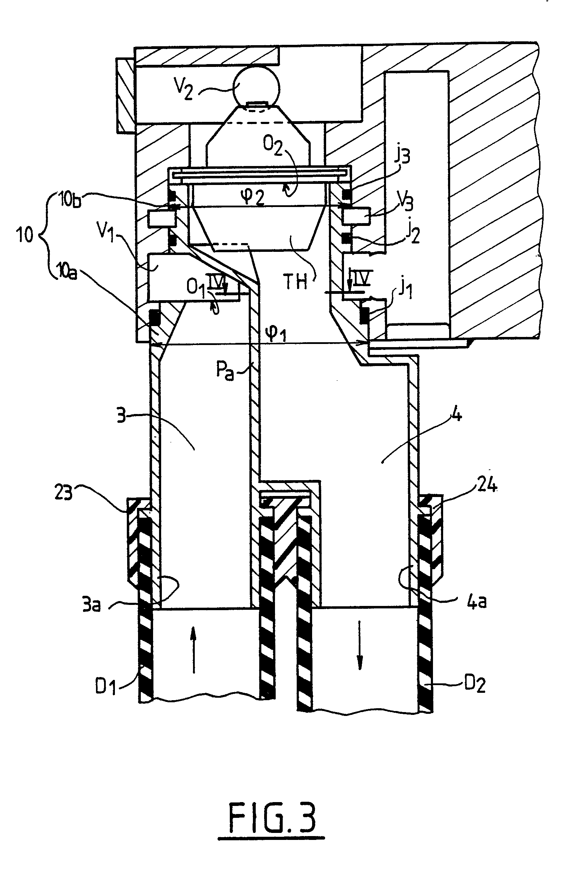

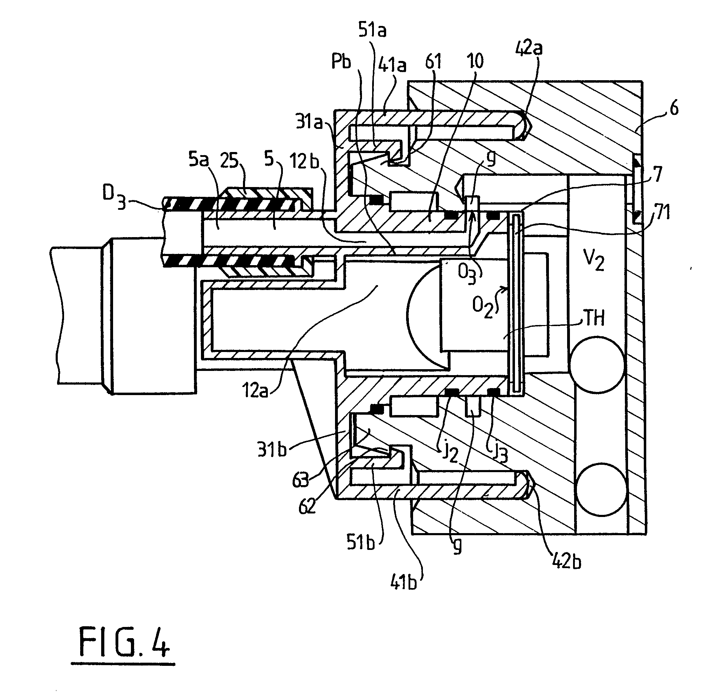

Comme bien montré sur la figure 3, l'embout 10 comporte une première partie 10a de diamètre extérieur $\phi1$ et une seconde partie, 10b, de diamètre extérieur $\phi2$ inférieur à $\phi1$, dans laquelle est ménagée une chambre intérieure 12a et une chambre périphérique 12b. Dans l'exemple de réalisation décrit et représenté, le conduit 3 est celui d'amenée de fluide au moteur et il débouche dans la première partie 10a, de l'embout par un orifice $O_1$ qui constitue l'orifice de communication avec la voie correspondante $V_1$ de la boîte à eau $B_1$ du moteur. De même, le conduit 4 qui est celui de retour de fluide chaud au radiateur traverse la partie 10a par une zone de liaison semi-conique, semi-cylindrique et débouche dans la chambre intérieure 12a par un orifice $O_2$ qui constitue l'orifice de communication du conduit 4 avec la voie correspondante $V_2$ de la boîte $B_1$. Le conduit 5, figure 4, qui est celui de dégazage traverse également la partie 10a et débouche dans la chambre 12b qui présente, sur sa périphérie extérieure, des orifices périphériques ou lumières $O_3$ qui constituent les orifices de communication du conduit 5 avec une gorge circulaire g qui fait partie de la voie de dégazage $V_3$ dans la boîte $B_1$, en communication avec le point haut du circuit d'eau du moteur.

Des joints d'étanchéité toriques j1, j2, j3 sont placés dans des gorges ménagées à cet effet sur la surface extérieure de l'embout mâle 10.

Comme le montrent les figures 2, 4 et 7, l'embase de l'embout 10, c'est-à-dire la partie dudit embout qui est la plus proche des extrémités libres des conduits 3, 4 et 5, présente deux saillies ou projections radiales $31_a$, $31_b$, perpendiculaires à l'axe de l'embout et qui portent des doigts de centrage $41_a$, $41_b$, parallèles à l'axe propres à coopérer avec des trous borgnes $42_a$, $42_b$ prévus à cet effet sur la boîte à eau, ainsi que deux projections élastiquement déformables ou clips $51_a$, $51_b$ pour l'accrochage automatique par effet de déclic dans des encoches à becs 61, 62 ménagées à cet effet sur la partie d'extrémité 63 d'une cheminée 6 solidaire de la boîte $B_1$.

Cette cheminée, 6, dans laquelle débouchent, à des niveaux différents, les voies $V_1$, $V_2$ et $V_3$ est profilée de manière à recevoir l'embout 10 et comporte ainsi une partie 64 de profil intérieur cylindrique de diamètre égal, au jeu nécessaire près, au diamètre extérieur de la partie 10a de l'embout 10 et une partie 65, figure 5, de diamètre interne correspondant au diamètre extérieur de la partie 10b. Comme illustré sur les figures 3 et 4, la cheminée 6 comporte en outre une gorge 7 dans laquelle est monté le joint d'étanchéité 71 d'une vanne thermostatique TH placée dans le circuit de liquide de refroidissement entre la voie $V_2$ et le conduit 4 de l'embout 10, c'est-à-dire immergée dans le liquide chaud sortant du moteur (ou recyclé dans celui-ci si la température d'ouverture de la vanne n'est pas atteinte).

Pour monter le raccord rapide $E_1$ sur la boîte à eau, il suffit d'aligner l'axe de l'embout 10 avec celui de la cheminée 6, alignement qui est facilité par l'engagement des doigts $41_a$ et $41_b$ dans les trous 42. Quand les doigts arrivent au fond des trous, les clips élastiques 51 sont verrouillés dans les encoches à bec 61 et 62 et les conduits 3, 4, 5 du raccord sont en communication étanche avec les voies $V_1$, $V_2$, et $V_3$ du boîtier, respectivement.

Le serrage assuré par les clips, et les trois joints j1, j2, j3 assurent l'étanchéité du circuit de liquide vis-à-vis de l'extérieur et des circuits de fluide froid, chaud et de dégazage l'un vis-à-vis de l'autre.

Un défaut d'étanchéité accidentel des joints j2 et j3 n'entraîne aucune perte de fluide de refroidissement, mais seulement un mélange partiel des circuits, contrairement aux systèmes de raccordement par colliers, seul le joint $J_1$ assurant l'étanchéité du circuit de liquide vis-à-vis de l'extérieur.

Outre la cheminée 6 décrite ci-dessus prévue pour coopérer avec un raccord $E_1$ à trois voies, la boîte à eau $B_1$ comporte également des organes référencés 6a pour le raccordement de deux voies $V'_1$, $V'_2$ en dérivation sur les voies $V_1$ et $V_2$ au radiateur de chauffage $R_2$ à l'aide d'un raccord rapide à deux voies décrit ci-après en référence aux figures 8-11.

Un tel raccord rapide $E_2$ selon l'invention est conçu sur le même principe que le raccord $E_1$, c'est-à-dire qu'il comporte comme ce dernier des conduits de montage des durites et un embout mâle muni de moyens de centrage et de clips dont la fixation sur la boîte à eau $B_2$ du radiateur R entraîne automatiquement le raccordement des durites à l'entrée et à la sortie du liquide de refroidissement dans ledit radiateur. Cependant, sa structure est plus simple du fait qu'il n'est destiné qu'au raccordement des durites $D_1$ et $D_2$ et ne comporte donc que deux voies de circulation.

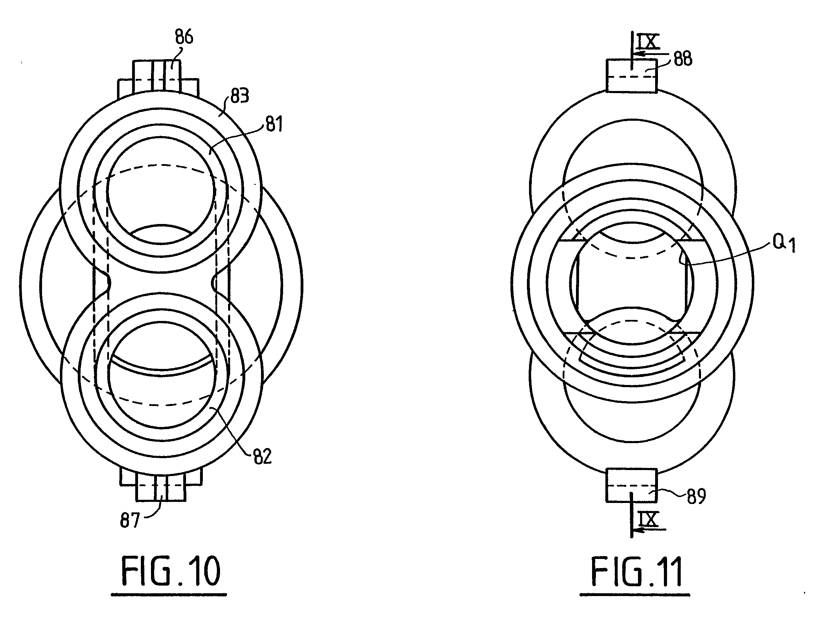

Comme bien visible sur les figures 8 et 9, il comporte essentiellement un embout mâle rigide, 70, en matière plastique et deux conduits de circulation du fluide de refroidissement, 81, 82 d'axes parallèles, raccordés à l'embout, les extrémités libres des conduits étant solidarisées aux durites montées sur celles-ci par un ou des manchons 83 réalisés par surmoulage.

Le ou les manchons 83 coiffent également de courtes projections 84 et 85 faisant saillie radialement sur la paroi externe des conduits 81 et 82, respectivement, et qui forment la base de deux clips élastiquement déformables 86 et 87 à extrémités libres conformés suivant des crochets 88 et 89 propres à jouer un rôle analogue aux clips 51 de la forme de réalisation décrite précédemment. De façon analogue à celle-ci, également, l'embout 70 comporte une première partie 71 et une seconde partie 72, de diamètre extérieur inférieur à celui de la partie 71, dans laquelle le conduit 82 débouche par un orifice $Q_2$ en regard d'un orifice correspondant de la cheminée femelle 91 de la boîte à eau $B_2$ du radiateur R lorsque le raccord est monté. Dans l'exemple de réalisation décrit et représenté, le conduit 82 est celui d'amenée du fluide de refroidissement du moteur au radiateur, comme montré par la flèche f, et qui est relié, par conséquent, à la voie $W_2$ ou "voie d'entrée chaude" de la boîte à eau $B_2$. Dans cette dernière est également prévue une voie $W_1$ ou "voie de sortie froide" qui, dans la condition de montage, communique avec le conduit 81 dont l'orifice de débouché $Q_1$ forme l'extrémité de la partie 72 de l'embout 70.

Des joints d'étanchéité toriques, k1, k2 sont placés le premier sur l'épaulement résultant des différences de diamètre extérieur des parties 71 et 72 le second dans une gorge ménagée sur la surface extérieure de ladite partie 72 de l'embout mâle 70.

Les deux orifices du radiateur, respectivement celui d'entrée d'eau chaude et de sortie d'eau froide sont situés du même côté du radiateur, à proximité l'un de l'autre, dans la boîte à eau $B_2$ comportant un embout femelle 91 de profil conjugué de celui de l'embout 70, ses parties 96, 97 ayant des profils intérieurs identiques, au jeu nécessaire près, respectivement aux profils extérieurs des parties 72, 71.

La chambre intérieure de la partie 96 est en communication avec la voie froide $W_1$ tandis que celle de la partie 97 est en communication avec la voie chaude $W_2$. Lorsque l'embout 70 est monté dans l'embout 91, la voie froide est donc en communication exclusive avec la voie 81 du raccord rapide par l'orifice $Q_1$ tandis que la voie chaude $W_2$ est en communication avec la voie 82 par l'orifice $Q_2$. Comme sur le raccord $E_1$, deux doigts de centrage sur la périphérie du raccord 70 coopèrent avec des trous sur la périphérie de la boîte à eau du radiateur et deux clips, solidaires des tubes 81 et 82 coopèrent avec des encoches sur la périphérie de cette boîte.

Le montage du raccord $E_2$ sur la boîte à eau $B_2$ du radiateur R est similaire à celui du raccord $E_1$ sur la boîte à eau $B_1$ du moteur : après alignement des axes de la cheminée 91 et de l'embout 70, une simple opération de rapprochement, robotisable, entraîne le verrouillage automatique des clips 86, 87 par encliquetage avec des becs conjugués 96 et 97 du boîtier $B_2$ et établit la communication étanche des conduits respectifs du raccord et des voies de la boîte à eau.

Les raccords sont avantageusement réalisés par moulage de matière plastique résistant sans ramollissement à des températures de l'ordre de 100° C et aux conditions régnant sous le capot moteur.

**Revendications**

1. Raccord rapide pour relier simultanément au moins deux tubulures ou durites à la boîte à eau d'un radiateur ou aux organes d'entrée et de sortie du fluide de refroidissement d'un moteur de véhicule automobile, ladite boîte à eau ou lesdits organes comportant une cheminée de forme générale cylindrique et n voies (n étant un entier au moins égal à deux) qui débouchent dans ladite cheminée, ledit raccord comportant n conduits rigides dont les débouchés dans ledit embout sont de forme et de position conjuguées des orifices de débouché desdites voies correspondantes dans la cheminée de la boîte à eau ou desdits organes pour former circuits de fluide, ainsi que des joints assurant l'étanchéité des différents circuits de fluide entre eux, caractérisé en ce qu'il comporte :
• un embout mâle (10, 70) de forme conjuguée de ladite cheminée (6, 91) ; et en ce que
• l'étanchéité des circuits vis-à-vis de l'extérieur est assurée par un unique joint supplémentaire ($j_1$) quel que soit le nombre de circuits.

2. Raccord rapide selon la revendication 1, dans lequel les conduits rigides comportent chacun au moins une partie cylindrique, d'axe parallèle à l'axe de l'embout, caractérisé en ce qu il comprend en outre :
• des manchons en nombre au plus égal à (21, 22, 23; 83) propres à solidariser une des extrémités de chacune desdites tubulures ou durites ($D_1$, $D_2$, $D_3$) respectivement sur les extrémités cylindriques libres desdits conduits (3, 4, 5 ; 81, 82) ; et
• des moyens de serrage et de verrouillage dudit embout sur la cheminée de ladite boîte à eau ou desdits organes d'entrée et de sortie du fluide de refroidissement.

3. Raccord rapide suivant la revendication 2, caractérisé en ce que lesdits moyens de serrage et de verrouillage sont constitués par au moins deux clips ($51_a$, $51_b$ ; 86, 87) coopérant avec des becs (61, 62 ; 96, 97) diamétralement opposés sur la surface externe de ladite cheminée (6, 91) de la boîte à eau ($B_1$, $B_2$) ou desdits organes d'entrée et de sortie du fluide de refroidissement du moteur.

4. Raccord rapide suivant la revendication 3, caractérisé en ce que la surface externe de ladite cheminée (6, 91) présente deux trous borgnes diamétralement opposés ($42_a$, $42_b$) et en ce que l'embout (10) comporte deux doigts de centrage ($41_a$, $41_b$) propres à coopérer avec les trous borgnes pour constituer des moyens d'alignement et de centrage dudit embout (10) par rapport à ladite cheminée (6).

5. Raccord rapide suivant l'une quelconque des revendications 1 à 4, caractérisé en ce que n étant égal à deux, ledit embout (70) comporte deux parties cylindriques (71, 72) de diamètres extérieurs différents, en ce que l'un des conduits de circulation (81) dudit raccord débouche dans la partie cylindrique (71) de plus petit diamètre en traversant celle de plus grand diamètre, tandis que l'autre conduit de circulation (82) débouche dans la partie cylindrique (72) de plus grand diamètre.

6. Raccord rapide suivant l'une quelconque des revendications 1 à 4, dans lequel n est égal à trois, pour la liaison de trois durites entre le moteur (M), le radiateur (R) et un bocal de dégazage (G) d'un circuit de refroidissement du moteur, caractérisé en ce que l'embout (10) comporte deux parties cylindriques (10a, 10b) de diamètres extérieurs différents, deux chambres concentriques, l'une intérieure (12a) et l'autre périphérique (12b), ménagées dans ladite partie (10b) de plus petit diamètre, un des conduits (3) destiné à être raccordé à une durite (D1) de liaison au radiateur (R) débouchant dans la partie de plus grand diamètre extérieur, l'autre conduit (4), destiné à être raccordé à l'autre durite ($D_2$) de raccordement au radiateur (R), débouchant dans ladite chambre intérieure (12a), en traversant la partie de plus grand diamètre, tandis que le conduit (5) destiné à être raccordé au bocal de dégazage (G) débouche dans ladite chambre périphérique.

7. Raccord rapide suivant la revendication 6, caractérisé en ce que les conduits (3, 4) qui débouchent dans la chambre intérieure (12a) de la seconde partie sont en partie limités par une paroi commune ($P_a$).

8. Raccord rapide selon la revendication 7, caractérisé en ce que la chambre intérieure (12a) de ladite seconde partie reçoit aussi un thermostat (TH) monté à étanchéité dans ladite chambre.

9. Raccord rapide suivant l'une quelconque des revendications 1 à 8, caractérisé en ce que son embout (10, 70) et ses conduits (3, 4, 5 ; 81, 82) sont en matière plastique dure supportant sans ramollissement des températures de l'ordre de 100° C.

10. Dispositif permettant d'établir un circuit de circulation de fluide de refroidissement entre le moteur d'un véhicule automobile, la boîte à eau du radiateur du véhicule et le cas échéant, un radiateur auxiliaire, caractérisé en ce qu'il comporte au moins deux raccords rapides suivant l'une quelconque des revendications 1 à 9, les durites (D1, D2, D3) destinées à la circulation dudit fluide ayant leurs extrémités fixées sur les conduits respectifs d'un et de l'autre embout par des manchons sur-

moulés sur ceux-ci.

FIG.1

FIG.6

FIG.7

FIG.5

FIG.2

FIG.3

FIG.4

D1

K2 70  K1  86  83

## FIG.8

W1

88  k1  86  84  83  81  D1

96

k2

B2

Q1

Q2

89

91

97  71  87  85  82  D2

72

70

W2

## FIG.9

f

FIG. 11

FIG. 10

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-2 596 134  (RECHEL) <br> * Page 4, lignes 1-25; fig. * | 1,2,5 | F 16 L  37/00 <br> F 28 F  9/02 |
| A |  | 6,10 |  |
|  | --- |  |  |
| A | EP-A-0 280 107  (GHIANS) <br> * Fig. * | 1,3 |  |
|  | ----- |  |  |

**DOMAINES TECHNIQUES RECHERCHES (Int. Cl.5)**

F 16 L
F 28 F

Le présent rapport a été établi pour toutes les revendications

| Lieu de la recherche | Date d'achèvement de la recherche | Examinateur |
|---|---|---|
| LA HAYE | 30-05-1990 | HUBEAU M.G. |

EPO FORM 1503 03.82 (P0402)